# FASCICULE DE BREVET EUROPEEN

(11) **EP 2 123 191 B1**
(45) Date de publication et mention de la délivrance du brevet: **17.09.2014**
(21) Numéro de dépôt: 09160582.4
(22) Date de dépôt: 19.05.2009
(51) Int. Cl.: G06Q 10/08, A47B 31/02

(54) **Chariot isotherme de transport de plateaux-repas réversible munis de radio-étiquettes**
Reversibler isothermer Wagen zum Transport von Speisenplatten, die mit Radio-Etiketten versehen sind
Isothermal cart for transporting reversible meal trays equipped with radio tags

(30) Priorité: 20.05.2008 FR 0853260
(43) Date de publication de la demande: 25.11.2009
(73) Titulaire: Electro Calorique, 69330 Pusignan (FR)
(72) Inventeur: Brossat, Pierre, 69006, Lyon (FR)
(74) Mandataire: Thibault, Jean-Marc

(56) Documents cités:
- EP-A- 0 656 186
- EP-A- 1 402 806
- EP-A- 1 814 072
- US-A1- 2007 252 694

## Description

La présente invention concerne le domaine du transport et de la distribution de repas à l'aide de plateaux, sur lesquels sont disposés des mets et divers ustensiles nécessaires à la consommation des aliments.

L'objet de l'invention suivant la revendication 1 trouve une application particulièrement avantageuse dans le domaine du transport et de la distribution de repas en milieu hospitalier.

Le transport et la distribution de plateaux-repas s'effectuent généralement à l'aide d'un chariot comportant un caisson isolant délimitant intérieurement au moins un logement accessible par au moins une porte et à l'intérieur duquel est monté une cloison isolante de séparation délimitant de part et d'autre, un compartiment froid et un compartiment chaud. Un tel chariot, décrit par exemple par la demande de brevet EP 06 56186, comporte des moyens de support aménagés dans le logement pour maintenir les plateaux-repas à différents niveaux superposés. De manière classique, chaque plateau possède deux alvéoles destinées à recevoir des ustensiles et des mets froids et chauds placés dans des récipients adaptés à la nature des aliments. En fonction de la composition du repas, les mets chauds peuvent être placés sur une alvéole, tandis que les mets froids sont placés sur l'autre alvéole disponible. En d'autres termes, chaque plateau-repas comporte une partie dite chaude délimitée par l'alvéole recevant les mets chauds, et d'autre part une partie dite froide délimitée par l'alvéole destinée à recevoir les mets froids ainsi que les divers ustensiles. Il est à noter qu'il existe des plateaux-repas dissymétriques, c'est-à-dire comportant une petite et une grande alvéoles présentant des surfaces différentes.

Les compartiments chauds et froids du chariot sont adaptés de manière à permettre le positionnement des plateaux-repas de manière réversible, c'est-à-dire que chaque compartiment est adapté pour recevoir indifféremment les petites ou les grandes alvéoles des plateaux-repas.

Bien entendu, chaque plateau-repas comporte divers produits destinés à un patient spécifique. Il est donc impératif que chaque patient reçoive le repas qui lui est destiné, dans des conditions de distribution respectant les règles d'hygiène et de sécurité alimentaires. De manière classique, l'identification du plateau-repas dans le chariot, ainsi que le détail de sa composition, est assuré par l'utilisation de fiches papier-repas disposées sur le plateau côté froid. Il est clair que ces feuilles sont volatiles ou peuvent être perdues ou échangées, et sont soumises aux conditions de l'environnement pouvant influer sur leur lisibilité.

Pour tenter de remédier à cet inconvénient, la demande de brevet EP 1 814 072 a proposé d'équiper chaque plateau-repas d'une radio-étiquette comportant diverses données et informations relatives au contenu du plateau-repas et à son destinataire. Ce document prévoit d'équiper le chariot de réception des plateaux-repas d'un équipement de communication avec les plateaux-repas.

Si cette solution technique évite l'utilisation de fiches repas-papier, cette solution ne donne pas satisfaction, dans la mesure où une telle solution ne permet pas de garantir une lecture correcte des informations des plateaux-repas quel que soit le sens d'introduction des plateaux-repas dans les compartiments du chariot.

La présente invention vise donc à remédier à cet inconvénient en proposant un nouveau chariot isotherme de transport de plateaux-repas conçu pour permettre une identification et une localisation électroniques des plateaux-repas à l'intérieur d'un chariot, tout en permettant la lecture des informations quel que soit le sens de positionnement ou d'introduction des plateaux-repas à l'intérieur du logement du chariot.

Pour atteindre un tel objectif, le chariot isotherme de transport de plateaux-repas comporte :
- une enveloppe isolante délimitant intérieurement au moins un logement accessible par au moins une porte et à l'intérieur duquel est montée une cloison isolante de séparation délimitant de part et d'autre un compartiment froid et un compartiment chaud, destinés à recevoir respectivement les zones froides et les zones chaudes des plateaux-repas formées par des alvéoles, la cloison de séparation étant pourvue de fentes de passage pour la zone de jonction entre les alvéoles des plateaux-repas,
- et des moyens de support aménagés dans le logement pour maintenir à différents niveaux superposés les plateau-repas, de sorte que leurs parties chaudes et froides se trouvent placées respectivement dans les compartiments chaud et froid.

Selon l'invention, la cloison de séparation est équipée à chaque niveau de réception d'un plateau repas, d'une antenne pour une radio-étiquette portée par ledit plateau-repas entre les alvéoles du plateau-repas, pour permettre une lecture de la radio-étiquette quel que soit le sens de positionnement des plateaux-repas à l'intérieur du logement, les antennes étant reliées à une unité centrale de traitement reliée à un écran d'affichage.

Avantageusement, chaque antenne est adaptée pour communiquer avec la radio-étiquette du plateau-repas disposé en correspondance au niveau de la zone de jonction entre les deux alvéoles du plateau-repas.

Dans le cas où l'étiquette radiofréquence est ponctuelle ou localisée, chaque radio-étiquette est montée dans la zone de jonction des alvéoles au milieu de la largeur du plateau-repas.

Selon une variante préférée de réalisation, le compartiment chaud est équipé d'une série d'éléments électriques de chauffage individuels de chaque partie chaude des plateaux-repas, reliés à l'unité centrale de traitement et en ce que chaque radio-étiquette des plateaux-repas comporte des paramètres de commande pour l'élément électrique de chauffage individuel associé.

Avantageusement, chaque radio-étiquette d'un plateau-repas comporte des données d'identification et d'information spécifiques audit plateau-repas.

Selon une variante de réalisation, l'unité centrale de traitement détermine à partir des informations recueillies par les antennes, le niveau de positionnement des plateaux-repas à l'intérieur du chariot et en ce que l'unité centrale de traitement est reliée à un écran affichant certaines des données d'identification et l'emplacement des plateaux-repas positionnés à l'intérieur du chariot.

Avantageusement, les compartiments chaud et froid sont adaptés pour recevoir l'une ou l'autre des zones des plateaux-repas qui sont réalisées par des alvéoles de surfaces différentes ou identiques.

Par exemple, chaque antenne est installée dans la cloison de séparation à proximité de chaque fente de passage pour un plateau-repas.

Selon un autre exemple de réalisation, le chariot isotherme comporte des moyens d'entrée de données reliés à l'unité centrale de traitement, adaptés pour assurer l'acquisition de données nutritionnelles après consommation, l'unité centrale de traitement assurant l'enregistrement de ces données nutritionnelles dans chacune des radio-étiquettes des plateaux-repas correspondants.

Diverses autres caractéristiques ressortent de la description faite ci-dessous en référence aux dessins annexés qui montrent, à titre d'exemples non limitatifs, des formes de réalisation de l'objet de l'invention.

La **Figure 1** est une vue schématique en perspective montrant un chariot isotherme de transport conforme à l'invention.

La **Figure 2** est une vue en élévation schématique d'un chariot de transport conforme à l'invention.

La **Figure 3** est une vue schématique en coupe selon sur la ligne III-III de la **Fig. 2****.**

La **Figure 4** est un diagramme fonctionnel illustrant le principe de commande du chariot conforme à l'invention.

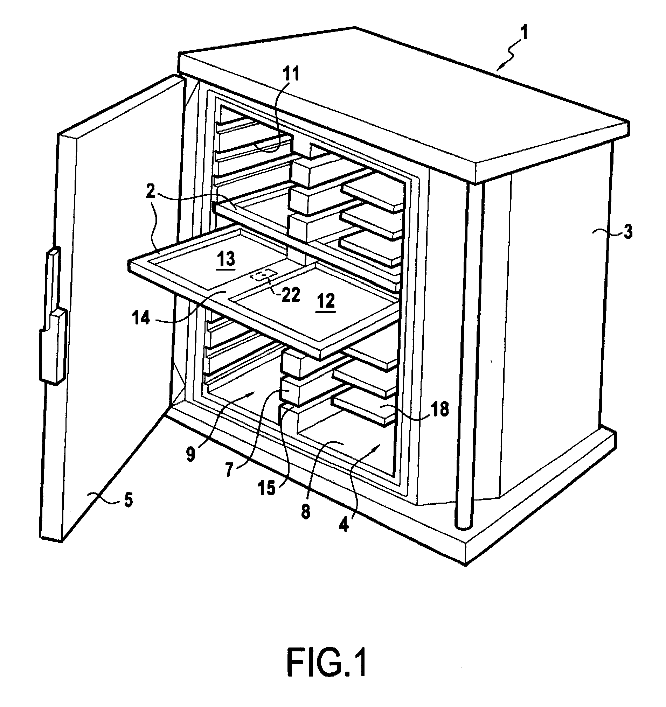

Tel que cela ressort plus précisément des **Fig. 1** à **3**, l'objet de l'invention concerne un chariot isotherme **1** constituant une unité de stockage et/ou de transport d'une série de plateaux-repas **2.** D'une manière classique, l'appareil **1** comporte un caisson ou une enveloppe isolante **3** délimitant intérieurement au moins un, et dans l'exemple illustré, deux logements **4** accessibles chacun par au moins une porte **5.** Chaque logement **4** est pourvu intérieurement d'une cloison isolante de séparation **7** délimitant de part et d'autre un compartiment froid **8** et un compartiment chaud **9.**

De manière classique, le chariot **1** est équipé de moyens **11** de support et de guidage des plateaux-repas **2.** De manière classique, ces moyens **11** sont formés par tous éléments aménagés de manière superposée sur les parois des compartiments, de manière à permettre de maintenir les plateaux-repas à différents niveaux superposés à l'intérieur de chaque logement **4.**

Chaque plateau-repas comporte une première partie **12** délimitée dans l'exemple illustré par une grande alvéole et une deuxième partie **13** délimitée par une petite alvéole. Ces alvéoles **12** et **13** présentent des surfaces différentes, de sorte que chaque plateau-repas **2** présente une forme dissymétrique. Chaque plateau-repas comporte une zone de jonction **14** entre les alvéoles **12** et **13.** Chaque plateau-repas **2** est destiné à être engagé dans un logement **4** de manière que la zone de jonction **14** se trouve placée en face de la cloison de séparation **7** qui présente des fentes superposées **15** de manière à permettre l'introduction et le passage des plateaux-repas. Bien entendu, l'objet de l'invention peut être mis en oeuvre avec des plateaux-repas **2** symétriques, c'est-à-dire comportant des alvéoles **12, 13** de surfaces sensiblement identiques.

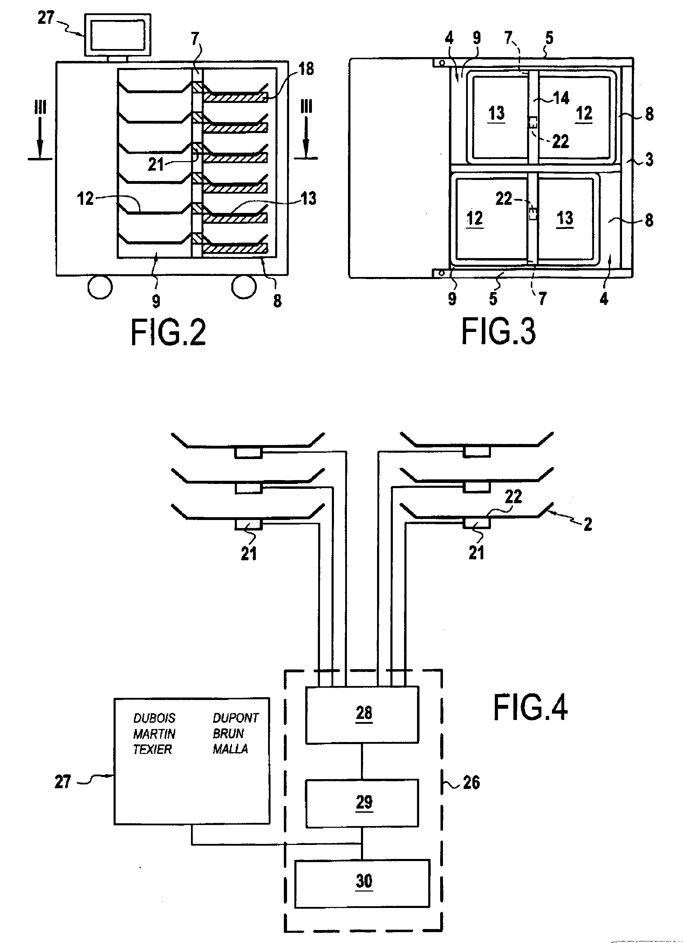

Comme cela ressort plus précisément des **Fig. 1** et **3****,** chaque plateau-repas **2** se trouve positionné à l'intérieur de chaque logement **4,** de manière que la zone de jonction **14** se trouve placée à l'aplomb de la cloison isolante de séparation **7,** de sorte que les alvéoles **12** et **13** s'étendent chacune dans un compartiment froid **8** ou chaud **9.** Le positionnement des alvéoles **12** et **13** dans l'un ou l'autre des compartiments froid **8** et chaud **9** dépend des mets chauds ou froids placés à l'intérieur de ces alvéoles. Comme illustré à la **Fig. 1****,** la grande alvéole **12** du plateau repas **2** partiellement engagée dans le logement **4** constitue la zone froide du plateau-repas, dans la mesure où cette alvéole **12** est destinée à être placée à l'intérieur du compartiment froid **8.** La petite alvéole **13** constitue la partie chaude de ce plateau-repas **1** dans la mesure où cette petite alvéole **13** est destinée à être placée dans le compartiment chaud **9.** Bien entendu, les compartiments froid **8** et chaud **9** sont adaptés pour recevoir indifféremment les petites **13** ou grandes **12** alvéoles des plateaux-repas. Ainsi, comme cela apparaît à la Fig. 3, les compartiments froid **8** et chaud **9** reçoivent chacun, à la fois des petites alvéoles **13** et des grandes alvéoles **12.**

Le chariot est équipé d'une série d'éléments électriques **18** assurant un chauffage individuel pour chaque plateau-repas **2** et plus précisément la partie chaude des plateaux-repas. Les éléments électriques **18** sont montés à l'intérieur du compartiment chaud **9** pour s'étendre de manière superposée, au-dessous (voire au-dessus) de chaque niveau de réception d'un plateau-repas. Par exemple, les éléments électriques de chauffage individuel **18** sont réalisés par des plaques résistives ou inductives s'étendant à l'intérieur du compartiment chaud **8.**

Le chariot **1** est adapté de manière classique, à permettre un refroidissement de préférence des deux compartiments **8** et **9** des logements **4.** A cet effet, le chariot **1** peut être pourvu d'un système de production de froid ou peut être raccordé à tout système permettant de refroidir les compartiments **8** et **9.**

Conformément à l'invention, la cloison de séparation **7** est équipée à chaque niveau de réception d'un plateau-repas, d'une antenne de communication **21** avec une radio-étiquette **22** portée par le plateau-repas entre la zone chaude et la zone froide du plateau-repas, c'est-à-dire entre les alvéoles **12** et **13.** Tel que cela ressort plus précisément de la **Fig. 1****,** une radio-étiquette **22** est disposée au niveau de la zone de jonction **14** du plateau-repas. Cette radio-étiquette **22** est rapportée en surface ou à coeur en étant noyée, encastrée ou logée dans la zone de jonction **14** ou fixée sur cette zone de jonction **14** par tous moyens appropriés.

De manière classique, cette radio-étiquette **22** connue également sous le terme « RFID Tag » ou « RFID transponder » est un composant passif ne disposant pas d'une alimentation électrique propre. Cette radio-étiquette **22** comprend généralement une antenne associée à une puce électronique de manière à permettre de communiquer avec l'antenne **21.** Ainsi, une antenne **21** permet à courte distance, de dialoguer avec une radio-étiquette **22.**

Avantageusement, chaque antenne **21** est installée dans la cloison de séparation **7** à proximité d'une fente **15** de passage pour un plateau-repas de manière que chaque radio-étiquette **22** se trouve placée en position superposée ou de vis-à-vis avec une antenne **21** spécifique au niveau de réception du plateau-repas. Le fonctionnement des antennes **21** dans la cloison de séparation **7** en combinaison avec le montage des radio-étiquettes **22** dans les zones de jonction **14** des plateaux-repas permet de positionner indifféremment l'une ou l'autre des alvéoles **12, 13** dans les compartiments **8, 9.**

Il est à noter que si la radio-étiquette **22** ne s'étend pas sur toute la longueur de la zone de jonction **14,** alors la radio-étiquette **22** doit être montée au milieu de la zone de jonction **14** pris en considération de sa longueur. En d'autres termes, cette radio-étiquette **22** est placée dans la zone de jonction **14,** au milieu de la profondeur ou de la largeur du plateau prise en considération de l'axe d'insertion ou de dégagement des plateaux-repas par rapport au logement **4.**

Tel que cela ressort plus précisément de la **Fig. 4****,** les antennes **21** sont reliées à une unité centrale de traitement **26** connectée à un écran d'affichage **27.** Par exemple, cette unité centrale de traitement **26** comporte un lecteur multiplexeur **28** relié aux antennes **21** de manière à pouvoir communiquer avec chacune d'entre elles. Ce lecteur multiplexeur **28** est relié à une unité de gestion **29** de la communication entre les antennes **21** et les radios-étiquettes **22.** L'unité centrale de traitement **26** permet ainsi notamment de lire les informations contenues dans les radio-étiquettes **22.** L'unité de gestion **29** est reliée à l'écran d'affichage **27.** L'unité centrale de traitement **26** comporte également une unité de contrôle **30** du fonctionnement du chariot, reliée à l'unité de gestion **29.** Cette unité de contrôle **30** qui est reliée à l'écran **27** permet de piloter le fonctionnement de la production de chaud et de froid.

Chaque radio-étiquette **22** comporte des données d'identification et d'information spécifiques au plateau-repas associé. Chaque radio-étiquette **22** est ainsi encodée au niveau de la chaîne de conditionnement des plateaux-repas pour contenir diverses informations relatives au patient, à son menu pour le repas concerné et à la distribution pour ce plateau, comme par exemple :
- nom - prénom du patient,
- adresse de distribution du plateau : service, chambre, lit, étage, bâtiment, etc.
- régime particulier que le patient doit observer (sans sel, mixé, hypocalorique, etc.)
- menu pour le repas concerné avec les différents composants (entrée, légume, viande, dessert, etc.) et des paramètres associés pouvant servir aux processus de traitement de ces composants dans les chariots (paramètres de chaud notamment).

A cet effet, chaque radio-étiquette **22** comporte de préférence des paramètres de commande pour un élément électrique **18** de chauffage individuel. Ces paramètres de commande peuvent ainsi tenir compte de la composition des mets chauds placés sur le plateau-repas. A ces mets chauds, peuvent être associés des paramètres particuliers et individuels concernant la chauffe en termes de durée ou de puissance (rapport cyclique). Par interaction des antennes **21** avec les radio-étiquettes **22,** les informations lues, lecteur par lecteur, et donc plateau par plateau, sont traitées et utilisées pour faire fonctionner individuellement l'élément chauffant **18** correspondant à un plateau pour servir aux processus de maintien au chaud ou de remise en température. Ainsi, l'unité de contrôle **30** qui gère la puissance peut traiter chaque élément chauffant indépendamment les uns des autres avec des paramètres de chauffe différents pour un processus de remise en température ou maintien plus fin. En cas d'absence d'un plateau sur un niveau, l'élément chauffant **18** ne sera pas alimenté, ce qui entraînera des gains de consommation électriques.

Les paramètres propres à chaque plateau permettent de définir une durée de chauffe pendant laquelle on appliquera le cycle idéal suivant toutes les deux minutes, ainsi que le rapport cyclique modulant la puissance de chauffe.

L'unité de gestion **29** détermine à partir des informations recueillies par les antennes **21,** le niveau de positionnement des plateaux-repas à l'intérieur du chariot. L'unité de gestion **29** affiche ainsi sur l'écran **27** certaines des données d'identification et l'emplacement des plateaux-repas positionnés à l'intérieur du chariot. Il est ainsi possible d'effectuer une géo-localisation précise des radio-étiquettes **22** et donc des plateaux-repas **2.** L'écran **27** affiche ainsi une cartographie du chariot, ce qui permet au personnel pendant la distribution des plateaux-repas, de savoir quel plateau-repas prendre pour chaque patient, sans avoir à ouvrir le chariot, tirer le plateau-repas hors de son emplacement et lire la fiche repas papier. Tel que cela ressort de la **Fig. 4****,** l'écran **27** affiche l'identification des plateaux-repas **2** pour les deux logements **4.**

L'écran **27** est à même d'afficher pendant toute la durée de la distribution des plateaux-repas, tout ou partie des données contenues dans les radio-étiquettes **22** de chaque plateau-repas.

Il est à noter que l'écran **27** peut afficher au moment de l'extraction du plateau repas, différentes informations telles que les mets disposés sur celui-ci et permettre au personnel de contrôler la bonne composition du repas avant distribution. Il est à noter que l'écran **27** peut afficher différentes informations également lors de l'introduction du plateau-repas dans le chariot **1.**

Selon une caractéristique avantageuse de réalisation, le chariot comporte des moyens d'entrée de données, par exemple nutritionnelles, correspondant à la consommation ou à la non-consommation des mets des plateaux-repas. Ces moyens d'entrée tels qu'un écran tactile ou un clavier permet au personnel, lors du retour des plateaux-repas, après consommation, de dresser un bilan de nutrition du patient. Ces moyens d'entrée sont reliés à l'unité centrale de traitement **26** qui assure l'enregistrement via l'unité de gestion **29** et le lecteur multiplexeur **28,** de ces données dans chaque radio-étiquette **22** associé au plateau-repas, pour lequel le bilan nutritionnel peut être dressé.

L'invention n'est pas limitée aux exemples décrits et représentés car diverses modifications peuvent y être apportées sans sortir de son cadre.

## Revendications

1. Chariot isotherme de transport de plateaux-repas (**2**) comportant :
- une enveloppe isolante (**3**) délimitant intérieurement au moins un logement (**4**) accessible par au moins une porte (**5**) et à l'intérieur duquel est montée une cloison isolante de séparation (**7**) délimitant de part et d'autre un compartiment froid (**8**) et un compartiment chaud (**9**), destinés à recevoir respectivement les zones froides et les zones chaudes des plateaux-repas formées par des alvéoles (**12, 13**), la cloison de séparation (**7**) étant pourvue de fentes (**15**) de passage pour la zone de jonction (**14**) entre les alvéoles (**12, 13**) des plateaux-repas,
- et des moyens de support (**11**) aménagés dans le logement (**4**) pour maintenir à différents niveaux superposés les plateau-repas, de sorte que leurs parties chaudes et froides se trouvent placées respectivement dans les compartiments chaud et froid, **caractérisé en ce que** la cloison de séparation (**7**) est équipée à chaque niveau de réception des fentes pour un plateau repas, d'une antenne (**21**) pour une radio-étiquette (**22**) portée par ledit plateau-repas entre les alvéoles (**12, 13**) du plateau-repas, pour permettre une lecture de la radio-étiquette quel que soit le sens de positionnement des plateaux-repas à l'intérieur du logement, les antennes (**21**) étant reliées à une unité centrale de traitement (**26**) reliée à un écran d'affichage (**27**).

2. Chariot isotherme selon la revendication 1, **caractérisé en ce que** chaque antenne (**21**) est adaptée pour communiquer avec la radio-étiquette (**22**) du plateau-repas disposé en correspondance au niveau de la zone de jonction (**14**) entre les deux alvéoles du plateau-repas.

3. Chariot isotherme selon la revendication 1 ou 2, **caractérisé en ce que** chaque radio-étiquette (**22**) est montée dans la zone de jonction (**14**) des alvéoles (**12, 13**) au milieu de la largeur du plateau-repas.

4. Chariot isotherme selon la revendication 1, **caractérisé en ce que** le compartiment chaud (**9**) est équipé d'une série d'éléments électriques (**18**) de chauffage individuels de chaque partie chaude des plateaux-repas, reliés à l'unité centrale de traitement (**26**) et **en ce que** chaque radio-étiquette (**22**) des plateaux-repas comporte des paramètres de commande pour l'élément électrique de chauffage individuel associé.

5. Chariot isotherme selon les revendications 1 à 4, **caractérisé en ce que** chaque radio-étiquette (**22**) d'un plateau-repas comporte des données d'identification et d'information spécifiques audit plateau-repas.

6. Chariot isotherme selon la revendication 5, **caractérisé en ce que** l'unité centrale de traitement (**26**) détermine à partir des informations recueillies par les antennes (**21**), le niveau de positionnement des plateaux-repas à l'intérieur du chariot et **en ce que** l'unité centrale de traitement (**26**) est reliée à un écran (**27**) affichant certaines des données d'identification et l'emplacement des plateaux-repas positionnés à l'intérieur du chariot.

7. Chariot isotherme selon l'une des revendications 1 à 6, **caractérisé en ce que** les compartiments chaud (**9**) et froid (**8**) sont adaptés pour recevoir l'une ou l'autre des zones des plateaux-repas qui sont réalisées par des alvéoles de surfaces différentes ou identiques (**12, 13**).

8. Chariot isotherme selon la revendication 1 ou 7, **caractérisé en ce que** chaque antenne (**21**) est installée dans la cloison de séparation à proximité de chaque fente (**15**) de passage pour un plateau-repas.

9. Chariot isotherme selon l'une des revendications 1 à 8, **caractérisé en ce qu'**il comporte des moyens d'entrée de données reliés à l'unité centrale de traitement (**26**), adaptés pour assurer l'acquisition de données nutritionnelles après consommation, l'unité centrale de traitement (**26**) assurant l'enregistrement de ces données nutritionnelles dans chacune des radio-étiquettes (**22**) des plateaux-repas.

## Patentansprüche

1. Isothermer Wagen zum Transportieren von Speisetabletts (2), umfassend:
- eine isolierende Hülle (3), die innen wenigstens eine Aufnahme (4) begrenzt, die über wenigstens eine Tür (5) zugänglich ist und innerhalb derer eine isolierende Trennwand (7) angebracht ist, die auf beiden Seiten ein kaltes Fach (8) und ein heißes Fach (9) begrenzt, welche dazu bestimmt sind, die durch Mulden (12, 13) gebildeten kalten Bereiche bzw. heißen Bereiche der Speisetabletts aufzunehmen, wobei die Trennwand (7) mit Durchgangsschlitzen (15) für den Verbindungsbereich (14) zwischen den Mulden (12, 13) der Speisetabletts versehen ist, und
- Tragmittel (11), die in der Aufnahme (4) angeordnet sind, um die Speisetabletts in unterschiedlichen übereinander liegenden Höhen zu halten, so dass deren heiße und kalte Teile in dem heißen bzw. dem kalten Fach angeordnet sind,
**dadurch gekennzeichnet, dass** die Trennwand (7) in jeder Aufnahmehöhe der Schlitze für ein Speisetablett mit einer Antenne (21) für ein Funketikett (22), das von dem Speisetablett zwischen den Mulden (12, 13) des Speisetabletts getragen wird, ausgestattet ist, um ein Lesen des Funketiketts unabhängig von der Positionierungsrichtung der Speisetabletts innerhalb der Aufnahme zu ermöglichen, wobei die Antennen (21) mit einer Zentraleinheit (26), welche mit einem Bildschirm (27) verbunden ist, verbunden sind.

2. Isothermer Wagen nach Anspruch 1, **dadurch gekennzeichnet, dass** jede Antenne (21) dazu ausgelegt ist, mit dem Funketikett (22) des Speisetabletts, das übereinstimmend in Höhe des Verbindungsbereichs (14) zwischen den beiden Mulden des Speisetabletts angeordnet ist, zu kommunizieren.

3. Isothermer Wagen nach Anspruch 1 oder 2, **dadurch gekennzeichnet, dass** jedes Funketikett (22) in dem Verbindungsbereich (14) der Mulden (12, 13) in der Mitte der Breite des Speisetabletts angebracht ist.

4. Isothermer Wagen nach Anspruch 1, **dadurch gekennzeichnet, dass** das heiße Fach (9) mit einer Reihe von elektrischen Elementen (18) zum individuellen Beheizen eines jeden heißen Teils der Speisetabletts ausgestattet ist, die mit der Zentraleinheit (26) verbunden sind, und dass jedes Funketikett (22) der Speisetabletts Steuerungsparameter für das zugeordnete elektrische Element zum individuellen Beheizen umfasst.

5. Isothermer Wagen nach den Ansprüchen 1 bis 4, **dadurch gekennzeichnet, dass** jedes Funketikett (22) eines Speisetabletts speisetablettspezifische Identifikations- und Informationsdaten umfasst.

6. Isothermer Wagen nach Anspruch 5, **dadurch gekennzeichnet, dass** die Zentraleinheit (26) anhand der durch die Antennen (21) aufgenommenen Informationen die Positionierungshöhe der Speisetabletts innerhalb des Wagens bestimmt und dass die Zentraleinheit (26) mit einem Bildschirm (27) verbunden ist, der einige der Identifikationsdaten und die Stelle der innerhalb des Wagens positionierten Speisetabletts anzeigt.

7. Isothermer Wagen nach einem der Ansprüche 1 bis 6, **dadurch gekennzeichnet, dass** das heiße Fach (9) und das kalte Fach (8) dazu ausgelegt sind, den einen oder den anderen der Bereiche der Speisetabletts aufzunehmen, die durch Mulden mit unterschiedlichen oder identischen Flächen (12, 13) ausgebildet sind.

8. Isothermer Wagen nach Anspruch 1 oder 7, **dadurch gekennzeichnet, dass** jede Antenne (21) in der Trennwand in der Nähe eines jeden Durchgangsschlitzes (15) für ein Speisetablett angebracht ist.

9. Isothermer Wagen nach einem der Ansprüche 1 bis 8, **dadurch gekennzeichnet, dass** er mit der Zentraleinheit (26) verbundene Dateneingabemittel umfasst, die dazu ausgelegt sind, die Erfassung von Nahrungsdaten nach dem Verzehr sicherzustellen, wobei die Zentraleinheit (26) die Speicherung dieser Nahrungsdaten in jedem der Funketiketten (22) der Speisetabletts sicherstellt.

## Claims

1. An insulated cart for transporting meal-trays (2), the cart comprising:
an insulating container (3) internally defining at least one housing (4) accessible through at least one door (5) and having an insulating separator partition (7) mounted therein defining a cold compartment (8) and a hot compartment (9) on either side thereof for receiving respectively the cold zones and the hot zones of metal-trays formed by indentations (12, 13), the separator partition (7) having slots (15) for passing the junction zone (14) between the indentations (12, 13) of the meal-trays; and
support means (11) arranged in the housing (4) to hold the meal-trays at different superposed levels in such a manner that their hot and cold portions are placed respectively in the hot and cold compartments;
the cart being **characterized in that** the separator partition (7) is provided at each meal-tray reception slot with an antenna (21) for a radio tag (22) carried by said meal-tray between the indentations (12, 13) of the meal-tray so as to enable the radio tags to be read regardless of the directions in which the meal-trays are positioned inside the housing, the antennas (21) being connected to a central processor unit (26) connected to a display screen (27).

2. An insulated cart according to claim 1, **characterized in that** each antenna (21) is adapted to communicate with the radio tag (22) of the meal-tray arranged correspondingly at the junction zone (14) between the two indentations of the meal-tray.

3. An insulated cart according to claim 1 or claim 2, **characterized in that** each radio tag (22) is mounted in the junction zone (14) between the indentations (12, 13) in the middle of the width of the meal-tray.

4. An insulated cart according to claim 1, **characterized in that** the hot compartment (9) is provided with a series of individual electric heater elements (18) for each hot portion of the meal-trays and connected to the central processor unit (26), and **in that** each of the radio tags (22) of the meal-trays includes control parameters for the associated individual electric heater element.

5. An insulated cart according to claims 1 to 4, **characterized in that** each radio tag (22) of a meal-tray includes identification and information data specific to said meal-tray.

6. An insulated cart according to claim 5, **characterized in that**, from the information picked up by the antennas (21), the central processor unit (26) determines the levels at which the meal-trays are positioned inside the cart, and **in that** the central processor unit (26) is connected to a screen (27) displaying at least some of the identification data and the locations of the meal-trays positioned inside the cart.

7. An insulated cart according to any one of claims 1 to 6, **characterized in that** the hot and cold compartments (9, 8) are adapted to receive one or the other of the meal-tray zones that are formed by indentations (12, 13) of surface areas that may be different or identical.

8. An insulated cart according to claim 1 or claim 7, **characterized in that** each antenna (21) is installed in the separator partition close to each slot (15) for passing a meal-tray.

9. An insulated cart according to any one of claims 1 to 8, **characterized in that** it includes data input means connected to the central processor unlit (26) and adapted to acquire nutritional data after consumption, the central processor unit (26) storing the nutritional data in each of the respective radio tags (22) of the meal-trays.
